# EUROPÄISCHE PATENTANMELDUNG

(11) **EP 0 844 304 A2**
(43) Veröffentlichungstag der Anmeldung: **27.05.1998**
(21) Anmeldenummer: 97250330.4
(22) Anmeldetag: 06.11.1997
(51) Int. Cl.: C12G 3/06, C12C 5/02

(54) **Alkoholhaltiges wässriges Getränk und Verfahren zu seiner Herstellung**

(30) Priorität: 22.11.1996 DE 19650018
(71) Anmelder: Wendt, Steffan, 10963 Berlin (DE); Seifert, Frank, 10967 Berlin (DE); Gerlach, Asbjörn, 14197 Berlin (DE)
(72) Erfinder: Wendt, Steffan, 10963 Berlin (DE); Seifert, Frank, 10967 Berlin (DE); Gerlach, Asbjörn, 14197 Berlin (DE)
(74) Vertreter: Wablat, Wolfgang, Dr.Dr.

(57) **Zusammenfassung**

Die vorliegende Erfindung betrifft ein alkoholhaltiges wäßriges Getränk, welches Inhaltsstoffe von Hanfpflanzen, insbesondere von Blüten, Blütenteilen, Pellets, Blütenextrakten und/oder Blütendestillaten enthält.

Das Verfahren zur Herstellung eines alkoholhaltigen wäßrigen Getränks durch übliches Maischen, Läutern, Kochen, Kühlen, Gären und Lagern zeichnet sich dadurch aus, daß zu einem beliebigen Zeitpunkt beim Kochen, Kühlen, Gären oder Lagern Hanfpflanzen, insbesondere Blüten und/oder Blütenteile und/oder aus ihnen hergestellte Produkte zugesetzt werden. Bevorzugt werden Inhaltsstoffe von Hanfpflanzen der Sorten Felina, Fedora und/oder Futura eingesetzt.

## Beschreibung

Die vorliegende Erfindung betrifft ein alkoholhaltiges wäßriges Getränk, welches Inhaltsstoffe von Hanfpflanzen enthält, sowie ein Verfahren zu seiner Herstellung.

Aus der Literatur sind eine Reihe von alkoholhaltigen Getränken, die Zusatzstoffe enthalten, bekannt. So beschreibt die DE 15 17 804 einen Zusatzstoff zum Bierbrauen, der aus einem Getreide einschließlich Roggen dadurch hergestellt wird, daß die Körper zunächst in Wasser geweicht und anschließend in einem Kocher bei Temperaturen zwischen 93° und 105°C wärmebehandelt werden. Dabei werden die Stärke gelatiniert, die Enzyme zerstört und die flüchtigen Aromen verdampft. Nach Trocknung und eventueller Konditionierung kann der Zusatzstoff gelagert und beim Bierbrauen eingesetzt werden.

Aus der DE-A-14 42 279 ist die Herstellung eines Bieres bekannt, bei dem die verwendeten Rohstoffe als Konzentrate vorliegen. Dabei können z. B. auch Kaffee, der Koffein enthält, zugesetzt werden. Die Zugabe von Kaffee erfolgt dabei zu dem Zweck, die Geschmacksrichtung des Bieres zu verändern.

Die EP 0 252 063 beschreibt ein Kohlensäure und Koffein enthaltendes Getränk. Dieses Getränk besteht aus einem auf Basis von Hopfen und Malz hergestellten Bier, dem Koffein in einer Menge von 65 bis 150 mg/l zugesetzt wurde.

Die Getränke des Standes der Technik weisen Geschmacksrichtungen auf, die nur einen Teil der Konsumenten befriedigen.

Der Erfindung liegt nun die Aufgabe zugrunde, ein Getränkzur Verfügung zu stellen, welches ein fruchtiges Aroma und Geschmack aufweist.

Die Aufgabe wird durch ein alkoholhaltiges wäßriges Getränk gelöst, das sich dadurch auszeichnet, daß es Inhaltsstoffe von Hanfpflanzen, insbesondere von Blüten, Blütenteilen, Pellets, Blütenextrakten und/oder Blütendestillaten enthält.

In einer bevorzugten Ausführungsform enthält das erfindungsgemäße Getränk Inhaltsstoffe von Hanfblüten und/oder Hanfblütenteilen und/oder Pellets in Mengen von 0,05 bis 10 Gew.% oder von Hanfblütenextrakten und/oder Hanfblütendestillaten in Mengen von 0,005 bis 5 Gew.-%.

Besonders bevorzugt werden Inhaltsstoffe von Hanfpflanzen der Sorten Felina, Fedora und/oder Futura eingesetzt. Ferner werden Hanfpflanzen mit einem Tetrahydrocannabinol-Gehalt von < 0,3 % bevorzugt eingesetzt.

Eine weitere bevorzugte Ausführungsform des erfindungsgemäßen alkoholhaltigen wäßrigen Getränks zeichnet sich dadurch aus, daß es 3 bis 20 Gew.% Extrakt, der aus Getreidemalz oder Rohfrucht gewonnen wird bzw. durch Zuckerzugabe, 0,03 bis 0,7 Gew.% Hopfen und 0,0002 bis 0,005 Gew.% Hefe enthält.

Ein weiterer Gegenstand der Erfindung ist ein Verfahren zur Herstellung eines alkoholhaltigen wäßrigen Getränkes durch übliches Maischen des Malzes, Läutern, Kochen, Kühlen, Gären und Lagern, das sich dadurch auszeichnet, daß zu einem beliebigen Zeitpunkt beim Kochen, Kühlen, Gären oder Lagern Hanfpflanzen, insbesondere Blüten und/oder Blütenteile und/oder aus ihnen hergestellte Produkte zugesetzt werden.

In einer besonders bevorzugten Ausführungsform des erfindungsgemäßen Verfahrens werden Hanfblüten und/oder Blütenteile und/oder aus ihnen hergestellt Produkte von Hanfpflanzen der Sorten Felina, Fedora und/oder Futura zugesetzt. Ferner werden Hanfpflanzen mit einem Tetrahydrocannabinol-Gehalt von < 0,3 % bevorzugt zugesetzt.

Eine weitere besonders bevorzugte Ausführungsform des erfindungsgemäßen Verfahrens ist dadurch gekennzeichnet, daß Hanfblüten und/oder Hanfblütenteile und/oder Pellets in Mengen von 0,05 bis 10 Gew.% oder Hanfblütenextrakte und/oder Hanfblütendestillate in Mengen von 0,005 bis 5 Gew.% zugesetzt werden.

Die Herstellung der Pellets, Extrakte und Destillate aus den Hanfblüten oder Hanfblütenteilen erfolgt nach dem Fachmann bekannten Methoden. Das erfindungsgemäße alkoholhaltige wäßrige Getränk weist ein fruchtiges Aroma und einen fruchtigen Geschmack, dessen Nuancen von Grapefruit über Mango bis Passionsfrucht reichen, auf.

Vor dem Abfüllen des Getränks in Flaschen, Dozen, Fässer, Container oder anderer Gebinde können dem Getränk Hanfblüten und/oder Hanfblütenteile und/oder aus ihnen hergestellte Produkte im Bereich der vorab angegebenen Konzentrationen zugesetzt werden.

Das Getränk kann vor der Abfüllung nach bekannten Filtrationsmethoden von den vorhandenen Hefezellen und Eiweißstoffen, gegebenenfalls unter Verwendung von üblichen Filterhilfs- und/oder Stabilisierungsmitteln, befreit und/oder anschließend mittels einer dem Fachmann bekannten Hochkurzzeiterhitzung (Flash-Pasteurisation) haltbar gemacht werden.

Die Erfindung wird an den nachfolgenden Beispielen näher erläutert.

### Beispiel 1

Einem auf übliche Weise gebrauten Bier werden pro Hektoliter Bier 125 g Hanfblüten der Hanfpflanzensorte Felina beim Kochen zugesetzt und das so hergestellte Getränk abgefüllt.

### Beispiel 2

Einem nach Art eines Bieres auf Basis von Getreidemalz, Hopfen und Hefe in an sich bekannter Weise hergestelltes Gärungsprodukt, das einen Alkoholgehalt von 4,9 Vol. % aufweist, werden pro Hektoliter 4000 g Hanfblütenextrakt der Hanfpflanzensorte Fedora zugesetzt und das so hergestellte Getränk abgefüllt.

### Beispiel 3

Ein Gerstenbier mit einem 9 %igen Stammwürzegehalt wird in üblicher Weise gebraut. Nach dem Gärungsvorgang werden dem Getränk im Lagertank pro Hektoliter 7860 g Hanfblütenteile der Hanfpflanzensorte Futura, die einen Tetrahydrocannabinol-Gehalt von 0,00003 % aufweisen, zugesetzt, das Getränk filtriert und in Flaschen abgefüllt. Bei Genuß dieses Getränkes wird die nach einem Biergenuß bei manchen Menschen auftretende Müdigkeit durch die anregende Wirkung des fruchtigen Aromas und Geschmacks der Hanfblütenteile zumindest teilweise kompensiert.

### Beispiel 4

Verfahren zur Herstellung des alkoholhaltigen wäßrigen Getränks.

Das Getreide-Malz wird mittels einer Mühle geschrotet und in einem geeigneten Gefäß mit Wasser vermischt. Das Verhältnis von Malz zu Wasser kann im Bereich von 1 : 2 bis 1 : 8 schwanken, je nachdem, welcher Alkoholgehalt im fertigen Getränk erreicht werden soll. Die Gesamtmaische wird in einem brauereiüblichen Infusions- oder Dekoktionsverfahren über verschiedene Temperaturstufen bis zu einer Temperatur von max. 80°C erhitzt. Dieser Vorgang dauert je nach der verwendeten Malzqualität und der gewünschten Getränkeeigenschaften zwischen 60 und 220 Minuten.

Die festen Bestandteile des Malzes (Spelzen oder Treber genannt) werden von den gelösten und während des Maischens in flüssige Form überführten Extraktbestandteilen getrennt. Dies geschieht entweder in einem mit einem Siebboden ausgestatteten Läuterbottich oder mittels eines Maischefilters. In der Regel wird der in den Trebern zurückgehaltene Extrakt nach der ersten Filtration nachträglich mit maximal 80°C heißem Wasser ausgewaschen. Dieser Vorgang ist jedoch keine Bedingung.

Die durch das Läutern gewonnene Würze wird mit Hopfen gekocht, die Kochtemperatur beträgt je nach Verfahren zwischen 96°C und 150°C, die Kochdauer zwischen 60 Sekunden und 180 Minuten.

Zu einem beliebigen Zeitpunkt während dieses Vorgangs bietet sich die Möglichkeit, Hanfblütenteile oder aus Ihnen hergestellte Produkte im Bereich der erfindungsgemäß angegebenen Konzentrationen einzeln oder in Kombination zuzusetzen.

Nach Beendigung des Kochvorganges wird die nun Würze genannte Flüssigkeit durch ein geeignetes Gefäß (z. B. Whirlpool) oder ein entsprechendes Gerät (z. B. Zentrifuge) vom Kochtrub befreit.

Danach wird die Kühlung entweder mittels eines Wärmetauschers oder auf einem Kühlschiff bis auf die angestrebte Anstelltemperatur durchgeführt. Die Anstelltemperatur beträgt je nach verwendeter Hefeart und Hefestamm zwischen 4°C und 26°C.

Zu einem beliebigen Zeitpunkt während dieses Vorganges bietet sich die Möglichkeit, Hanfblütenteile oder aus ihnen hergestellt Produkte im Bereich der erfindungsgemäß angegebenen Konzentrationen einzeln oder in Kombination zuzusetzen.

Die Hauptgärung wird durch eine unter- oder obergärige Bier- oder Brauereihefe und/oder eine Weinhefe vorgenommen. Die Würze wird vor, während, oder nach der Hefegabe belüftet. Der angestrebte Sauerstoffgehalt in der Würze liegt zwischen 8 mg/l und 12 mg/l.

Die Gärung erfolgt in dafür vorgesehenen offenen oder geschlossenen Gefäßen oder Behältern, die mit einer Kühlung (Direkt- oder Raumkühlung) ausgestattet sind, um die Gärtemperatur zu steuern. Die Gärtemperatur schwankt im Bereich von 4°C bis 26°C, je nach Hefeart und Hefestamm. Die Dauer der Hauptgärung beträgt - ebenfalls abhängig von Hefeart und Hefestamm, sowie vom Extraktgehalt der Würze - zwischen 2 und 14 Tagen.

Zu einem beliebigen Zeitpunkt während dieses Vorgangs bietet sich die Möglichkeit, Hanfblütenteile oder aus ihnen hergestellt Produkte im Bereich der erfindungsgemäß angegebenen Konzentrationen einzeln oder in Kombination zuzusetzen.

Die Nachgärung oder Lagerung stellt einen Reifungsprozeß dar, bei dem der Restextrakt bei Temperaturen zwischen 2°C - 12°C und einer Dauer zwischen 7 - 120 Tagen langsam bzw. still vergoren wird. In speziellen geschlossenen Lagergefäßen, welche direkt oder raumgekühlt und mit einer Spundapparatur versehen sind, reichert sich das Getränk je nach eingestelltem Gegendruck mit gärungseigener Kohlensäure an.

Zu einem beliebigen Zeitpunkt während dieses Vorganges bietet sich die Möglichkeit, Hanfblütenteile oder aus ihnen hergestellt Produkte im Bereich der angegebenen Konzentrationen einzeln oder in Kombination zuzusetzen.

Das Getränk kann vor der Abfüllung filtriert und gegebenenfalls pasteurisiert werden. Die Abfüllung erfolgt entweder direkt vom Lagertank oder nach einer Filtration und Pasteurisation. Nach der Filtration wird das Getränk in einem Puffertank aufgefangen. Auch hier bietet sich die Möglichkeit, Hanfblütenteile oder aus ihnen hergestellte Produkte im Bereich der erfindungsgemäß angegebenen Konzentrationen einzeln oder in Kombination zuzusetzen. Hiernach wird das Getränk auf Flaschen, Dosen, Fässer, Container oder andere Gebinde abgefüllt.

### Beispiel 5

Verfahren zur Herstellung eines alkoholhaltigen wäßrigen Getränks (alle Mengenangaben beziehen sich auf 100 Liter).

### Rohstoffe

a) 7 kg Pilsener Malz, 7 kg Münchner Malz, 2 kg Cara-Hell, 2 kg Weizenmalz
b) 52 Liter enthärtetes Wasser (Hauptguß)
c) 110 g "Hallertauer Perle"-Aromahopfen
d) 300 g "Felina 34"-Nutzhanfblüten

### Schroten

die gesamte Malzmenge, auch Schüttung genannt, wird mittels einer Walzenmühle geschrotet.

### Maischen

das Malzschrot wird nun mit dem auf 52°C vorgeheizten Wasser (Hauptguß) vermengt. Anschließend wird hochgeheizt auf 62 - 64 °C (1. Temperaturrast, Dauer: 30 min.). Es erfolgt ein erneutes Hochheizen, nun auf 72 - 74 °C (2. Temperaturrast, sog. Verzuckerungsrast, Dauer: 30 min.)

Bei Jodnormalität der Maische (es liegt keine Stärke mehr vor) wird aufgeheizt auf 76 - 78 °C zum Abmaischen (Umpumpen der Maische vom Maisch- in den Läuterbottich).

### Läutern

nach dem Abmaischen erfolgt eine Läuterruhe (Absetzen der festen und ungelösten Bestandteile der Maische , die dann auf dem Siebboden des Läuterbottichs eine Filterschicht bilden). Nach dem Abziehen und Zurückpumpen der Trubwürze erfolgt der Vorderwürzeablauf (20 - 24 Liter, Extraktgehalt: 18 - 22 Gew.%, Dauer: 30 - 35 min.). Nun beginnt das Aussüßen des Treberkuchens durch 3 aufeinanderfolgende Nachgüsse (ebenfalls enthärtetes Wasser, 76 °C heiß), die sich wie folgt zusammensetzen:
1. NG: 30 Liter, Dauer: 35 - 45 min., Extraktgehalt: 12 - 18 Gew.%;
2. NG: 25 Liter, Dauer: 25 - 35 min., Extraktgehalt: 6 - 12 Gew.%
3. NG: 25 Liter, Dauer: 25 - 35 min., Extraktgehalt; 1,5 - 6 Gew.%

Nach dem "Trockenziehen" des Treberkuchens (15 - 20 Liter, Dauer: 25 - 35 min., Extraktgehalt: 0,5 - 1,5 Gew%) ist der Läutervorgang beendet, es kann nun ausgetrebert werden (Entfernen des Treberkuchens aus dem Läuterbottich) und gleichzeitig bringt man durch Hochheizen die gewonnene Würzemenge in der Würzepfanne zum Kochen. Resultierend aus den eingesetzten Mengen erhält man ein "Pfanne voll"-Volumen von 115 - 120 Litern mit einem Extraktgehalt von 10,5 - 11,5 Gew.%.

### Kochen

Nach Einsetzen der Kochung erfolgt unmittelbar die Hopfengabe (einstellen der Grundbittere). Bei Halbzeit der 90 minütigen Kochung wird die Hanfgabe vorgenommen.

### Ausschlagen

Die Würze wird nun in eine Rotationsbewegung (sog. "Whirlpool-Effekt") versetzt, damit der Trub (koaguliertes Eiweiß + Hopfengerbstoffe) sich in der Mitte der Würzepfanne absetzen kann. Dieser Trub wird dann abgeschieden. Das eigentliche Ausschlagen erfolgt durch Abziehen der Würze über eine Kühlvorrichtung. Die gekühlte Würze wird dann direkt in das Gärgefäß eingelassen.

### Anstellen

Beim Kühlen erfolgt eine ausreichende Belüftung. Anschließend werden 0,5 Liter dickbreiige Hefe unter gleichmäßigem Rühren zugegeben. Nach 12 - 24 Stunden setzt die Gärung ein.

### Gärung

Wird obergärig bei 18 - 22 °C vollzogen und dauert in der Regel 6 - 8 Tage. Bei einem Spindelwert von 3,5 - 4,0 Gew.%, also 1,0 - 1,5 Gew.% über dem Endvergärungsgrad hat das Jungbier seine "Schlauchreife" erreicht und kann in die Lagertanks gefüllt werden.

### Lagern

Das "Jungbier" lagert nun in geschlossenen Tanks bei einer Temperatur von 0 - 2 °C für eine Dauer von 3 - 4 Wochen. Nach Ablauf dieser Lagerdauer erfolgt ein Umdrücken auf Ausschankbehälter, von denen aus der Trunk unfiltriert ausgeschenkt wird.

## Patentansprüche

1. Alkoholhaltiges wäßriges Getränk, dadurch gekennzeichnet, daß es Inhaltsstoffe von Hanfpflanzen, insbesondere von Blüten, Blütenteilen, Pellets, Blütenextrakten und/oder Blütendestillaten enthält.

2. Alkoholhaltiges wäßriges Getränk nach Anspruch 1, dadurch gekennzeichnet, daß es Inhaltsstoffe von Hanfblüten und/oder Hanfblütenteilen und/oder Pellets in Mengen von 0,05 bis 10 Gew.% oder von Hanfblütenextrakten und/oder Hanfblütendestillaten in Mengen von 0,005 bis 5 Gew.% enthält.

3. Alkoholhaltiges wäßriges Getränk nach Anspruch 1 oder 2, dadurch gekennzeichnet, daß es Inhaltsstoffe von Hanfpflanzen der Sorten Felina, Fedora und/oder Futura enthält.

4. Alkoholhaltiges wäßriges Getränk nach Anspruch 3, dadurch gekennzeichnet, daß es Inhaltsstoffe von Hanfpflanzen mit einem Tetrahydrocannabinol-Gehalt von < 0,3 % enthält.

5. Alkoholhaltiges wäßriges Getränk nach mindestens einem der Ansprüche 1 bis 4, dadurch gekennzeichnet, daß es zusätzlich Getreidemalz, Hopfen und Hefe enthält.

6. Verfahren zur Herstellung eines alkoholhaltigen wäßrigen Getränkes durch übliches Maischen des Malzes, Läutern, Kochen, Kühlen, Gären und Lagern, dadurch gekennzeichnet, daß zu einem beliebigen Zeitpunkt beim Kochen, Kühlen, Gären oder Lagern Hanfpflanzen, insbesondere Blüten und/oder Blütenteile und/oder aus ihnen hergestellte Produkte zugesetzt werden.

7. Verfahren nach Anspruch 6, dadurch gekennzeichnet, daß die Hanfblüten und/oder Blütenteile und/oder aus ihnen hergestellte Produkte von Hanfpflanzen der Sorten Felina, Fedora und/oder Futura zugesetzt werden.

8. Verfahren nach Anspruch 7, dadurch gekennzeichnet, daß Hanfpflanzen mit einem Tetrahydrocannabinol-Gehalt von <0,3 % zugesetzt werden.

9. Verfahren nach mindestens einem der Ansprüche 6 bis 8, dadurch gekennzeichnet, daß Hanfblüten und/oder Pellets in Mengen von 0,05 bis 10 Gew.% oder Hanfblütenextrakte und/oder Hanfblütendestillate in Mengen von 0,005 bis 5 Gew.% zugesetzt werden.
